# DEMANDE DE BREVET EUROPEEN

(11) **EP 2 061 243 A1**
(43) Date de publication de la demande: **20.05.2009**
(21) Numéro de dépôt: 07120554.6
(22) Date de dépôt: 13.11.2007
(51) Int. Cl.: H04N 7/16

(54) **Procédé pour l'accés á des données á accés conditionnel**

(71) Demandeur: Nagravision S.A., 1033 Cheseaux-sur-Lausanne (CH)
(72) Inventeur: Zhao, Yishan, 92160, Antony (FR); Piquet, Mathieu, 75002, Paris (FR)
(74) Mandataire: Leman Consulting S.A.

(57) **Abrégé**

La présente invention concerne un procédé pour l'accès à des données à accès conditionnel à partir d'une unité d'utilisateur. Ce procédé comporte les étapes suivantes :
- affichage par l'unité d'utilisateur d'une liste de données disponibles, cette liste étant envoyée dans au moins un message comportant pour au moins une donnée, un droit d'accès provisoire à ladite donnée;
- choix de données à accès conditionnel parmi la liste de données disponibles;
- envoi d'une requête à un centre de gestion, cette requête demandant l'envoi d'un droit définitif pour l'accès auxdites données choisies;
- activation par l'unité d'utilisateur dudit droit provisoire;
- réception d'un message de contrôle ECM contenant au moins d'une part une clé de déchiffrement destinée à permettre l'accès à une partie des données à accès conditionnel choisies et d'autre part, les conditions d'accès auxdites données, ces conditions d'accès impliquant que l'accès est autorisé si au moins un droit provisoire ou un droit définitif est présent;
- détermination par l'unité d'utilisateur si l'un des droits, provisoire ou définitif, est présent;
- si aucun droit n'est présent, interdiction d'accès aux données à accès conditionnel.

## Description

### DOMAINE TECHNIQUE

La présente invention concerne un procédé pour l'accès à des données à accès conditionnel à partir d'une unité d'utilisateur. Plus précisément, ce procédé est destiné à permettre un accès immédiat à des données à lorsqu'un utilisateur a requis de telles données. L'unité d'utilisateur à partir de laquelle des données peuvent être accédées ou un événement peut être visualisé peut être notamment un décodeur associé à une télévision, un récepteur mobile tel qu'un téléphone portable, un agenda électronique (PDA), un récepteur TV de poche (pocket TV) ou tout autre support similaire. Une telle unité d'utilisateur peut comporter un module de sécurité en charge d'au moins certaines opérations cryptographiques en relation avec l'accès aux données.

### TECHNIQUE ANTERIEURE

Dans le domaine de l'accès à des données à accès conditionnel tel qu'en particulier la télévision à péage, un flux numérique de données est transmis vers un téléviseur, un récepteur ou plus généralement une unité d'utilisateur, de façon chiffrée, ceci afin de pouvoir en contrôler l'utilisation et d'imposer des conditions pour une telle utilisation. Ce chiffrement est réalisé grâce à des mots de contrôle (Control Words) ou des clés de chiffrement de trafic (Traffic encryption keys) qui sont changés à intervalle régulier (typiquement entre 2 et 30 secondes, bien que des intervalles nettement plus longs puissent être utilisés) afin de dissuader toute attaque visant à retrouver un tel mot de contrôle.

Pour que le récepteur puisse déchiffrer le flux chiffré par ces mots de contrôle, ces derniers lui sont envoyés indépendamment du flux dans des messages de contrôle (ECM) chiffrés par une clé propre au système de transmission entre un centre de gestion et un module de sécurité de l'unité d'utilisateur.

De façon bien connue de l'homme du métier, le module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lors du déchiffrement d'un message de contrôle (ECM), il est vérifié, dans le module de sécurité (SC), que le droit pour accéder au flux considéré est présent. Ce droit peut être géré par des messages d'autorisation (EMM) qui chargent un tel droit dans le module de sécurité. D'autres possibilités sont également envisageables telles que l'envoi de clés de déchiffrement.

Pour la suite de l'exposé, on appellera "événement" un contenu vidéo, audio (par exemple MP3) ou données (programme de jeu par exemple) qui est chiffré selon la méthode connue des mots de contrôle, chaque événement pouvant être chiffré par un ou plusieurs mots de contrôle, chacun ayant une durée de validité déterminée.

Un message de contrôle ECM ne contient pas uniquement le mot de contrôle, mais également les conditions pour que ce mot soit renvoyé du module de sécurité au récepteur/décodeur. Lors du déchiffrement des mots de contrôle, il sera vérifié si un droit associé aux conditions d'accès énoncées dans le message est présent dans le module de sécurité.

Le mot de contrôle n'est retourné au récepteur que lorsque la comparaison est positive. Ce mot de contrôle est contenu dans un message de contrôle ECM qui est chiffré par une clé de transmission.

Pour que le droit soit présent dans le module de sécurité, il est généralement chargé dans ce module par un message d'autorisation EMM qui pour des raisons de sécurité, est généralement chiffré par une clé différente dite clé de droit.

Selon une forme connue de diffusion de télévision à péage, les trois éléments suivants sont nécessaires pour déchiffrer un événement à un moment donné:
- les données relatives à l'événement chiffré par un ou une pluralité de mots de contrôle CW,
- le ou les messages de contrôle ECM contenant les mots de contrôle CW et les conditions d'accès AC
- le droit correspondant stocké dans le module de sécurité permettant de vérifier les dites conditions d'accès.

De façon conventionnelle, il est possible d'accéder à des événements ou des données par abonnement ou par achat impulsif. Dans le cas d'un abonnement, les droits sont connus par avance, ce qui permet à l'utilisateur d'accéder à l'événement dès qu'il le souhaite.

Dans le cas de l'achat impulsif, les événements disponibles à l'achat sont généralement affichés sous forme de liste, d'images fixes ou de séquences d'images. L'utilisateur peut choisir l'événement qu'il souhaite acquérir à partir de la liste ou des images.

Avant d'envoyer une requête pour acquérir un événement, l'utilisateur bénéficie généralement d'une séquence gratuite, d'une durée limitée.

Lorsque l'utilisateur a envoyé une requête pour l'achat d'un programme, après la fin de la séquence gratuite, il doit attendre l'arrivée d'un droit pour avoir la possibilité de visualiser l'événement ou accéder aux données. En fonction du réseau (IP, 3GPP, DVB, ...), l'attente est plus ou moins longue. Pendant cette attente, l'accès à l'événement n'est pas possible.

### EXPOSE DE L'INVENTION

La présente invention se propose d'éviter ce problème en autorisant un utilisateur qui a commandé un événement, à bénéficier d'un accès temporaire à cet événement avant d'avoir reçu le droit qui y est lié.

Le but de l'invention est atteint par un procédé pour l'accès à des données à accès conditionnel à partir d'une unité d'utilisateur, ce procédé comportant les étapes suivantes :
- affichage par l'unité d'utilisateur d'une liste de données disponibles, cette liste étant envoyée dans au moins un message comportant pour au moins une donnée, un droit d'accès provisoire à ladite donnée;
- choix de données à accès conditionnel parmi la liste de données disponibles;
- envoi d'une requête à un centre de gestion, cette requête demandant l'envoi d'un droit définitif pour l'accès auxdites données choisies;
- activation par l'unité d'utilisateur dudit droit provisoire;
- réception d'un message de contrôle ECM contenant au moins d'une part une clé de déchiffrement destinée à permettre l'accès à une partie des données à accès conditionnel choisies et d'autre part, les conditions d'accès auxdites données, ces conditions d'accès impliquant que l'accès est autorisé si au moins un droit provisoire ou un droit définitif est présent;
- détermination par l'unité d'utilisateur si l'un des droits, provisoire ou définitif, est présent;
- si aucun droit n'est présent, interdiction d'accès aux données à accès conditionnel.

Selon la présente invention, on transmet à l'unité d'utilisateur, un droit provisoire. Ce droit provisoire est utilisable par l'unité d'utilisateur si certaines conditions sont remplies. Si tel est le cas, l'unité d'utilisateur est autorisée à accéder au contenu, à l'événement ou aux données à accès conditionnel pendant un certain temps, limité. Ce temps limité est réglé de telle manière que le droit pour accéder à l'événement ou aux données soit normalement arrivé à destination de l'unité d'utilisateur concernée avant que l'utilisateur n'ait plus le droit d'accéder à l'événement. De cette manière, un utilisateur autorisé qui a valablement commandé un événement aura un accès immédiat à cet événement, quelle que soit la durée d'acheminement du droit depuis le centre de gestion jusqu'à l'unité d'utilisateur.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 représente des messages utilisés pour former un guide électronique de programme selon la présente invention ;
- la figure 2 illustre sous forme de schéma bloc, le déroulement du procédé de l'invention.

### MANIERES DE REALISER L'INVENTION

La présente invention est décrite dans un mode de réalisation dans lequel l'unité multimédia est un récepteur mobile du type téléphone portable ou assistant électronique ou un récepteur de salon du type décodeur.

Dans ce type de récepteurs, la liste des canaux ou des événements disponibles est envoyée à l'avance et peut être visualisée par l'utilisateur. Cette liste peut être réalisée sous forme de texte, d'images, de séquences d'images ou d'une combinaison de ces éléments par exemple.

Dans cette liste apparaissent en principe en particulier les événements disponibles pour l'achat impulsif, c'est-à-dire les événements auquel l'utilisateur n'a pas un accès libre par abonnement, mais qu'il est malgré tout autorisé à visualiser s'il paie un montant correspondant à l'achat de cet événement.

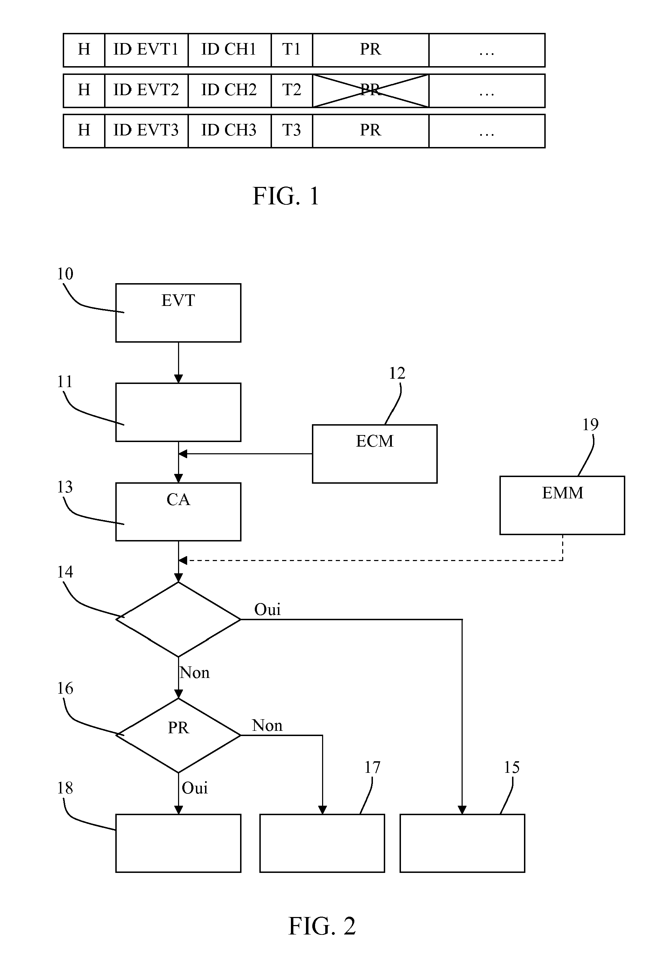

Cette liste forme un guide de programme électronique (EPG = Electronic program guide) ou un guide de services électronique (ESG = Electronic service guide). A la différence des guides électroniques conventionnels, le guide électronique de la présente invention contient en plus des informations conventionnelles, à savoir les identifiant des événements (ID EVT), les identifiant des canaux (ID CH) et les horaires (T1, T2) en particulier, un droit provisoire (PR). Le guide électronique est généralement envoyé sous la forme de messages illustrés par la figure 1. Chaque message contient un en-tête H en plus de informations mentionnées ci-dessus. Ces messages sont traités et mémorisés par le récepteur et peuvent être affichés sous une forme utilisable par l'utilisateur.

Selon l'invention, le droit provisoire peut être générique ou spécifique. Dans le cas où le droit provisoire est générique, il donne un droit à une visualisation libre d'une portion d'un événement, quel que soit l'événement ou le canal choisi. Dans le cas où le droit provisoire est spécifique à un canal ou un événement, il contient un identifiant du canal ou de l'événement et ne peut être utilisé que pour le canal ou l'identifiant correspondant.

Le droit provisoire est utilisable généralement pour accéder uniquement à une portion d'un événement. Cette portion peut être définie par une durée par exemple, par un nombre de mots de contrôle qu'un utilisateur est autorisé à déchiffrer, par un compteur ou par tout autre moyen adéquat permettant de limiter la durée de visualisation.

Le procédé selon l'invention est décrit en référence à la figure 2 et fonctionne de la manière suivante. En premier lieu, il est supposé que l'utilisateur a reçu un guide électronique qui lui indique quels sont les événements auxquels il peut avoir accès sous forme d'achat impulsif.

L'utilisateur choisit un événement à acquérir dans le programme électronique (EPG, ESG). Ceci correspond à l'étape 10 de la figure 2. II envoie alors au moyen de son récepteur, une requête à un centre de gestion pour obtenir un droit définitif pour cet événement. Généralement un tel droit est envoyé dans un message de gestion (EMM = Entitlement management message). L'envoi de cette requête correspond à l'étape 11 de la figure.

Pour accéder à l'événement commandé, il est nécessaire de disposer d'un ou plusieurs messages de contrôle ECM (Entitlement control message) lié à l'événement. Chaque message de contrôle contient un ou plusieurs mots de contrôle CW permettant de déchiffrer une partie du contenu chiffré et ainsi d'accéder à l'événement souhaité. Ce message de contrôle contient également les conditions d'accès CA requises. De façon conventionnelle, les messages de contrôle ECM sont envoyés de façon périodique, avec un cycle de répétition très court, par exemple 50 ms. De cette manière, le contenu de tels messages est très rapidement disponible pour chaque récepteur. L'envoi des messages de contrôle est illustré par l'étape 12 de la figure 2. Dans une étape 13, les conditions d'accès CA sont extraites des messages de contrôle ECM reçus. Selon la présente invention, les conditions d'accès sont telles que l'accès est autorisé soit si un droit provisoire est présent, soit si le droit définitif est présent.

Dans une étape 14, il est tout d'abord vérifié si le droit définitif est présent. Si tel est le cas, l'accès aux données est autorisé ce qui est représenté par l'étape 15. Si au contraire, le droit définitif n'est pas présent, le procédé effectue, lors d'une étape 16, une vérification de la présence d'un droit provisoire PR.

Si l'événement ou le canal choisi bénéficie d'un accès libre limité dans le temps, ce droit provisoire est présent puisqu'il a été reçu dans l'un des messages formant le guide électronique. La présence ou l'absence de ce droit provisoire est définie par les messages formant le guide électronique, comme cela est indiqué en référence à la figure 1.

Si l'événement choisi par l'utilisateur requiert un droit définitif et qu'un droit provisoire n'est pas suffisant, il n'y a par conséquent pas adéquation entre les conditions d'accès CA à cet événement et les droits présents. De même, si aucun droit provisoire n'est présent, le procédé interdit l'accès à cet événement, ce qui est représenté par l'étape 17.

Si l'événement choisi par l'utilisateur est accessible au moyen d'un droit provisoire, la condition pour le déchiffrement du message de contrôle et le renvoi des mots de contrôle CW déchiffrés est remplie. L'accès aux données est autorisé, ce qui est représenté par l'étape 18. Après que la durée de l'accès libre est écoulée, le droit provisoire s'éteint et les mots de contrôle CW ne sont plus retournés au décodeur si le droit provisoire n'a pas été remplacé par le droit définitif.

Ce cycle est répété soit jusqu'à ce que le droit définitif ait été reçu, auquel cas le système fonctionne de façon conventionnelle, en utilisant le droit définitif, soit jusqu'à ce que la portion de l'événement en accès libre ait été entièrement utilisée.

L'envoi du message contenant le droit définitif est illustré par l'étape 19 de la figure 2. Cet envoi peut intervenir à n'importe quel moment du procédé de l'invention, le procédé étant essentiellement réalisé au niveau du récepteur et l'envoi du droit définitif étant réalisé par un centre de gestion.

Des mécanismes de lutte contre l'usage abusif des droits provisoires sont intégrés. Ces mécanismes visent à lutter contre le comportement illégal suivant : un utilisateur choisi un événement disponible pour l'achat impulsif. II bloque l'envoi de la requête au centre de gestion. Il bénéficie toutefois, selon le procédé de l'invention, d'un accès à une partie de l'événement grâce au droit provisoire. Avant l'extinction de ce droit provisoire, l'utilisateur recommande le même événement en bloquant de nouveau l'envoi de la requête. Grâce au droit provisoire, il peut accéder à une partie supplémentaire de l'événement.

Le même mécanisme peut également lutter contre la prévisualisation d'un grand nombre de portions d'événements différents sans qu'aucune commande réelle ne soit passée.

Selon un premier mode de réalisation du mécanisme de lutte contre les abus, supposons que le droit provisoire soit générique, c'est-à-dire qu'il soit valable pour n'importe quel événement que l'utilisateur souhaite commander.

Dans ce mode de réalisation, le droit provisoire se réfère à une date et une heure pour éviter l'utilisation non souhaitée de ce droit. Pour ceci, lorsqu'un droit provisoire est utilisé, la date et l'heure, généralement contenues dans les messages de contrôle ECM, est mémorisée. Lorsque l'utilisateur souhaite employer un nouveau droit provisoire, l'unité multimédia vérifie la date actuelle et le nombre de droits provisoires utilisés pendant un laps de temps prédéfini. Ceci est possible grâce à la mémorisation de la date d'utilisation des droits provisoires. Une règle peut être définie. A titre d'exemple, cette règle peut imposer qu'il est possible d'utiliser au maximum deux fois un droit provisoire pendant une période de 24 heures. Ainsi, si les deux droits provisoires autorisés par 24 heures ont déjà été "consommés", l'accès à un événement au moyen d'un nouveau droit provisoire ne sera pas possible et l'utilisateur devra attendre l'arrivée d'un message contenant le droit définitif pour l'événement qu'il a commandé. De cette manière, s'il a bloqué l'envoi de la requête pour l'événement considéré, il ne recevra pas le droit définitif et ne pourra pas non plus accéder à l'événement au moyen du droit provisoire.

Selon un autre mode de réalisation, l'utilisateur peut disposer par exemple de deux "jetons" virtuels. Lorsqu'un droit provisoire est utilisé, un jeton est éliminé, de sorte qu'il n'en reste plus qu'un. Lorsqu'un nouveau droit provisoire est utilisé pour accéder à un événement, le jeton restant est à son tour éliminé. De cette manière, un nouveau droit provisoire ne pourra plus être utilisé aussi longtemps qu'un nouveau jeton n'est pas acquis.

Un ou plusieurs jetons peuvent être acquis par exemple lorsqu'un droit définitif est reçu par l'unité multimédia. La réception d'un tel droit définitif signifie que l'utilisateur a réellement acquis un événement. Il pourra donc de nouveau bénéficier d'un droit provisoire de visualisation gratuite. Les jetons correspondent de façon conventionnelle à une valeur de compteur.

Selon une variante, il est également possible d'attribuer aux droits provisoires non pas des jetons, mais un crédit. Le principe de fonctionnement est le même que dans le cas des jetons. II est toutefois possible d'attribuer une valeur différente pour différents droits provisoires. Les jetons ou les crédits sont mémorisés dans une mémoire de l'unité d'utilisateur ou récepteur, cette mémoire étant en principe inviolable ou impossible à falsifier. Le module de sécurité peut valablement mémoriser le nombre de jetons ou le crédit restant.

## Revendications

1. Procédé pour l'accès à des données à accès conditionnel à partir d'une unité d'utilisateur, ce procédé comportant les étapes suivantes :
- affichage par l'unité d'utilisateur d'une liste de données disponibles, cette liste étant envoyée dans au moins un message comportant pour au moins une donnée, un droit d'accès provisoire à ladite donnée;
- choix de données à accès conditionnel parmi la liste de données disponibles;
- envoi d'une requête à un centre de gestion, cette requête demandant l'envoi d'un droit définitif pour l'accès auxdites données choisies;
- activation par l'unité d'utilisateur dudit droit provisoire;
- réception d'un message de contrôle ECM contenant au moins d'une part une clé de déchiffrement destinée à permettre l'accès à une partie des données à accès conditionnel choisies et d'autre part, les conditions d'accès auxdites données, ces conditions d'accès impliquant que l'accès est autorisé si au moins un droit provisoire ou un droit définitif est présent;
- détermination par l'unité d'utilisateur si l'un des droits, provisoire ou définitif, est présent;
- si aucun droit n'est présent, interdiction d'accès aux données à accès conditionnel.

2. Procédé selon la revendication 1, **caractérisé en ce que** l'unité d'utilisateur mémorise le fait que des données ont été accédées au moyen d'un droit provisoire.

3. Procédé selon la revendication 2, **caractérisé en ce que** l'unité d'utilisateur contient des moyens pour limiter l'accès aux données par l'intermédiaire d'un droit provisoire.

4. Procédé selon la revendication 3, **caractérisé en ce que** l'utilisation d'un droit provisoire pour accéder à des données est mémorisée en liaison avec une information temporelle, et **en ce que** les moyens pour limiter l'accès aux données par un droit provisoire consistent à bloquer l'utilisation d'un nouveau droit provisoire si le nombre de droits provisoires utilisés pendant une période prédéfinie a atteint une valeur de seuil.

5. Procédé selon la revendication 3, **caractérisé en ce que** l'unité d'utilisateur contient un compteur, l'utilisation d'un droit provisoire pour accéder à des données modifiant la valeur de ce compteur, et **en ce que** les moyens pour limiter l'accès aux données par un droit provisoire consistent à bloquer l'utilisation d'un nouveau droit provisoire si la valeur mémorisée dans le compteur a atteint une valeur de seuil.

6. Procédé selon la revendication 5, **caractérisé en ce que** la modification de la valeur du compteur lors de l'utilisation d'un droit provisoire dépend des données auxquelles le droit provisoire a permit d'accéder.

7. Procédé selon la revendication 6, **caractérisé en ce que** la modification de la valeur du compteur lors de l'utilisation d'un droit provisoire est identique, quelles que soient les données auxquelles le droit provisoire a permit d'accéder.

8. Procédé selon la revendication 1, **caractérisé en ce que** le droit provisoire est valable pour accéder à une partie des données à accès conditionnel.

9. Procédé selon la revendication 8, **caractérisé en ce que** la partie à laquelle le droit provisoire donne accès est définie par une durée.

10. Procédé selon la revendication 8, **caractérisé en ce que** la partie à laquelle le droit provisoire donne accès est définie par un nombre de clés de déchiffrement desdites données.

11. Procédé selon la revendication 1, **caractérisé en ce que** l'on autorise l'utilisation d'un nouveau droit provisoire à réception d'un droit définitif.
